# EUROPÄISCHE PATENTSCHRIFT

(11) **EP 2 855 930 B1**
(45) Veröffentlichungstag und Bekanntmachung des Hinweises auf die Patenterteilung: **13.01.2016**
(21) Anmeldenummer: 13727863.6
(22) Anmeldetag: 04.06.2013
(51) Int. Cl.: F03D 11/00, F03D 3/06, G01M 5/00

(54) **VERFAHREN ZUR INSTALLATION VON SENSOREN IN ROTORBLÄTTERN UND INSTALLATIONSVORRICHTUNG**
METHOD FOR INSTALLING SENSORS IN ROTOR BLADES AND INSTALLATION DEVICE
PROCÉDÉ D'INSTALLATION DE CAPTEURS DANS DES PALES DE ROTOR ET DISPOSITIF D'INSTALLATION

(30) Priorität: 05.06.2012 DE 102012104875
(43) Veröffentlichungstag der Anmeldung: 08.04.2015
(73) Patentinhaber: Technische Universität München, 80333 München (DE)
(72) Erfinder: BUCK, Thorbjörn, 80636 München (DE); HOFFMANN, Lars, 80796 München (DE); MÜLLER, Mathias, 81541 München (DE); WOJTECH, Rolf, 80689 München (DE)
(74) Vertreter: Zimmermann & Partner Patentanwälte mbB
(86) Internationale Anmeldenummer: PCT/EP2013/061501
(87) Internationale Veröffentlichungsnummer: WO 2013/182569

(56) Entgegenhaltungen:
- EP-A2- 2 362 094
- WO-A2-2008/092461
- DE-U1-202007 008 066

## Beschreibung

### TECHNISCHES GEBIET

Die vorliegende Erfindung betrifft allgemein eine Überwachung des Betriebs von Windkraftanlagen, insbesondere die Überwachung von Biegemomenten in Rotorblättern von Windkraftanlagen, und betrifft weiter ein Verfahren zur Installation von Sensoreinheiten in Rotorblättern, welche derartige Biegemomente überwachen können. Ferner betrifft die vorliegende Erfindung eine Installationsvorrichtung zur Installation mindestens einer Sensoreinheit innerhalb eines Rotorblatts einer Windkraftanlage.

### STAND DER TECHNIK

Zur Überwachung von Windenergieanlagen gewinnen Systeme, welche Blattbiegemomente von Rotorblättern detektieren können, zunehmend an Bedeutung. Insbesondere können für derartige Messungen faseroptische Dehnungssensoren eingesetzt werden, die an einer Blattwurzel des Rotorblatts verklebt werden. Die Genauigkeit derartiger Messungen ist in hohem Maße abhängig von einer exakten Positionierung derartiger faseroptischer Dehnungssensoren, sowohl in axialer Richtung des Rotorblatts als auch in Umfangsrichtung des Rotorblatts.

Eine Sensorinstallation im Inneren von Rotorblättern von Windenergieanlagen gestaltet sich aufgrund der Umgebungsbedingungen, wie beispielsweise Dunkelheit, gefährlicher bzw. schlecht zugänglicher Bauraum, Verschmutzung, etc. komplex. Für eine Installation eines Rotorblatt-Messsystems muss der Betrieb der Windenergieanlage unterbrochen werden, was zu einem Ertragsausfall führt, welcher mit hohen Kosten verbunden sein kann. Eine Ermittlung einer geeigneten Sensorposition von einem oder mehreren Dehnungssensoren innerhalb des Rotorblatts nach herkömmlichen Verfahren ist ferner äußerst zeitaufwändig, wodurch weitere Kosten entstehen. Bei der Installation von Sensoren ist weiter eine hohe Präzision bei deren Positionierung sicherzustellen.

Das Dokument WO 2008/092461 A2 betrifft ein Verfahren und eine Vorrichtung zum Messen von geometrischen Parametern eines Rotorblatts einer Windkraftanlage. Mittels einer servomotorbetriebenen Einrichtung kann ein geometrisches Vermessungsinstrument bewegt werden. Das Vermessungsinstrument kann mit einem Laserpointer versehen sein, welcher sich infolge der Bewegung des Vermessungsinstruments durch den Servomotor mitbewegt.

Das Dokument DE 20 2007 008 066 U1 betrifft eine Vorrichtung zum Vermessen des Winkels eines Rotorblattes einer Windkraftanlage. Die Messrichtung der Lage von Referenzpunkten wird in einem rotornabenfesten Bezugssystem gemessen. Mittels eines ultraschall- oder lasergestützten Entfernungsmessers kann die Entfernung von Referenzpunkten zur Blattwurzel ermittelt werden.

### ZUSAMMENFASSUNG DER ERFINDUNG

Die vorliegende Erfindung stellt ein Verfahren zur Installation von Sensoren in Rotorblättern gemäß Patentanspruch 1 bereit. Ferner stellt die vorliegende Erfindung eine Installationsvorrichtung zur Installation von mindestens einer Sensoreinheit innerhalb eines Rotorblatts einer Windkraftanlage mit den Merkmalen des Patentanspruchs 8 bereit.

Gemäß einer Ausführungsform stellt die vorliegende Erfindung ein Verfahren zum Installieren mindestens einer Sensoreinheit innerhalb eines Rotorblatts einer Windkraftanlage bereit, wobei das Verfahren ein Emittieren eines ersten im wesentlichen ebenen Lichtfächers in das Innere des Rotorblatts, ein Emittieren mindestens eines zweiten im wesentlichen ebenen Lichtfächers in das Innere des Rotorblatts, wobei die Ebene des ersten Lichtfächers in einem vorbestimmten Winkel zu der Ebene des zweiten Lichtfächers ausgerichtet ist, und wobei die Ebenen des ersten und zweiten Lichtfächers an dem Blattflansch des Rotorblatts ausgerichtet sind, und ein Ausrichten der mindestens einen Sensoreinheit in Bezug auf die Lichtfächer einschließt.

Gemäß einer weiteren Ausführungsform stellt die vorliegende Erfindung eine Installationsvorrichtung zur Installation mindestens einer Sensoreinheit innerhalb eines Rotorblatts einer Windkraftanlage bereit, wobei die Installationsvorrichtung eine Halteeinrichtung, die angepasst ist zur Anbringung an einem Blattflansch des Rotorblatts, eine erste an der Halteeinrichtung angebrachte Linienlaser-Emissionseinrichtung, die angepasst ist zur Emission eines ersten im wesentlichen ebenen Lichtfächers in das Innere des Rotorblatts, eine zweite an der Halteeinrichtung angebrachte Linienlaser-Emissionseinrichtung, die angepasst ist zur Emission eines zweiten im wesentlichen ebenen Lichtfächers in das Innere des Rotorblatts, und eine Ausrichteinheit zum Ausrichten der Halteeinrichtung auf eine Winkelkoordinate des Blattflansches einschließt.

### KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:
- Figur 1: eine Querschnitts-Seitenansicht eines Rotorblatts mit angebrachter Linienlaser-Emissionseinrichtung zur Bereitstellung eines Lichtfächers;
- Figur 2: eine Querschnittsansicht senkrecht zu einer Achse eines Rotorblatts an der Position des Blattflansches;
- Figur 3: eine weitere Querschnittsansicht mit an dem Blattflansch angebrachter Halteeinrichtung für Linienlaser-Emissionseinrichtungen;
- Figur 4: eine perspektivische Ansicht eines Rotorblatts mit der Darstellung zweier senkrecht aufeinander stehender Lichtfächer; und
- Figur 5: ein Flussdiagramm, welches ein Verfahren zum Installieren einer Sensoreinheit innerhalb eines Rotorblatts einer Windkraftanlage veranschaulicht.

In den Zeichnungen bezeichnen gleiche Bezugszeichen gleiche oder funktionsgleiche Komponenten oder Schritte.

### WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

Ausführungsformen der vorliegenden Erfindung, die hierin beschrieben sind, betreffen unter anderem ein Verfahren zum Installieren mindestens einer Sensoreinheit innerhalb eines Rotorblatts einer Windkraftanlage. Das Verfahren beruht auf einem Emittieren eines ersten im wesentlichen ebenen Lichtfächers in das Innere des Rotorblatts, wobei der Lichtfächer vom Blattflansch des Rotorblatts aus emittiert wird. Weiterhin wird mindestens ein zweiter, im wesentlichen ebener Lichtfächer in das Innere des Rotorblatts emittiert, wobei zur Erzeugung der ersten und zweiten Lichtfächer Linienlaser-Emissionseinrichtungen mittig an dem Blattflansch bereitgestellt werden. Die Ebene des ersten Lichtfächers ist in einem vorbestimmten Winkel zu der Ebene des zweiten Lichtfächers ausgerichtet, wobei die Ebenen des ersten und zweiten Lichtfächers wiederum an dem Blattflansch des Rotorblatts ausgerichtet sind. Die beiden Lichtfächer-Ebenen können weiterhin in einer Richtung parallel zu der Rotorblattachse verlaufen. Ferner erfolgt ein Ausrichten der mindestens einen Sensoreinheit in Bezug auf die Lichtfächer bzw. in Bezug auf Laserlichtlinien, welche durch die Lichtfächer im Inneren des Rotorblatts auf die Innenflächen des Rotorblatts geschrieben werden.

Überdies betreffen Ausführungsformen der vorliegenden Erfindung, die hierin beschrieben sind, eine Installationsvorrichtung zur Installation mindestens einer Sensoreinheit innerhalb des Rotorblatts einer Windkraftanlage. Die Installationseinrichtung schließt eine Halteeinrichtung ein, die angepasst ist zur Anbringung an einem Blattflansch des Rotorblatts. Eine erste an der Halteeinrichtung angebrachte Linienlaser-Emissionseinrichtung dient der Emission eines ersten im wesentlichen ebenen Lichtfächers in das Innere des Rotorblatts. Ferner ist eine zweite, an die Halteeinrichtung angebrachte Linienlaser-Emissionseinrichtung bereitgestellt zur Emission eines zweiten im wesentlichen ebenen Lichtfächers in das Innere des Rotorblatts. Eine Ausrichteinheit ist bereitgestellt zum Ausrichten der Halteeinrichtung auf eine Winkelkoordinate des Blattflansches. Somit kann eine Sensorposition in Umfangsrichtung im Inneren des Rotorblatts festgelegt werden. Eine axiale Sensorposition, d.h. ein Abstand einer an der Innenfläche des Rotorblatts anzubringenden Sensoreinheit beispielsweise von dem Blattflansch kann dann mit einer separaten Abstandsmesseinrichtung in einfacher Weise bestimmt werden.

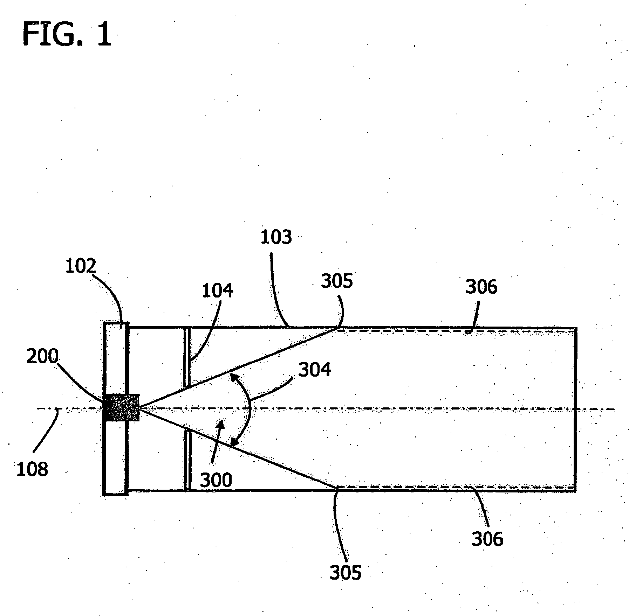

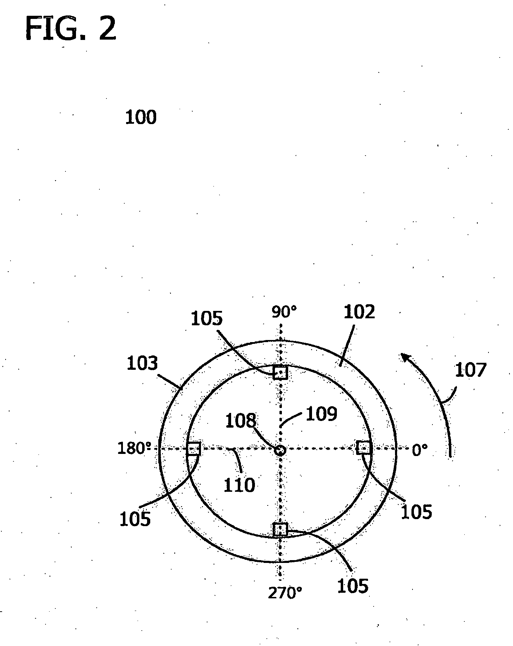

Fig. 1 ist eine Seiten-Querschnittsansicht eines Rotorblatts 103, welches einen Blattflansch 102 und ein Blattschott 104 aufweist. Eine Emissionseinrichtung 200 ist im wesentlichen zentral auf einer Rotorblattachse 108 an der Position des Blattflansches 102 angeordnet. Alternativ kann die Emissionseinrichtung 200 in einem vorbestimmten Abstand von der Rotorblattachse 108 angeordnet sein. Die Emissionseinrichtung kann als eine Linienlaser-Emissionseinrichtung 200 ausgebildet sein, welche einen Lichtfächer 300 emittiert. Dieser Lichtfächer 300 weist, beispielsweise begrenzt durch das Blattschott 104, einen vollen Öffnungswinkel 304 auf. Der Öffnungswinkel 304 bestimmt einen Auftreffpunkt 305 von Randstrahlen des Lichtfächers 300 an der Innenwand des Rotorblatts 103. Ausgehend von dem jeweiligen Auftreffpunkt 305 des Laserlichts an der Innenwand des Rotorblatts 103 werden Lichtlinien 306 an der Innenseite des Rotorblatts 103 sichtbar, entlang derer Sensoren, wie sie unten stehend unter Bezugnahme auf Fig. 2 beschrieben sind, ausgerichtet und anschließend installiert werden können. Somit dienen die Lichtlinien 306 als Hilfe zum Auffinden einer Umfangsposition für anzubringende Sensoreinheiten wie beispielsweise faseroptische Dehnungssensoren.

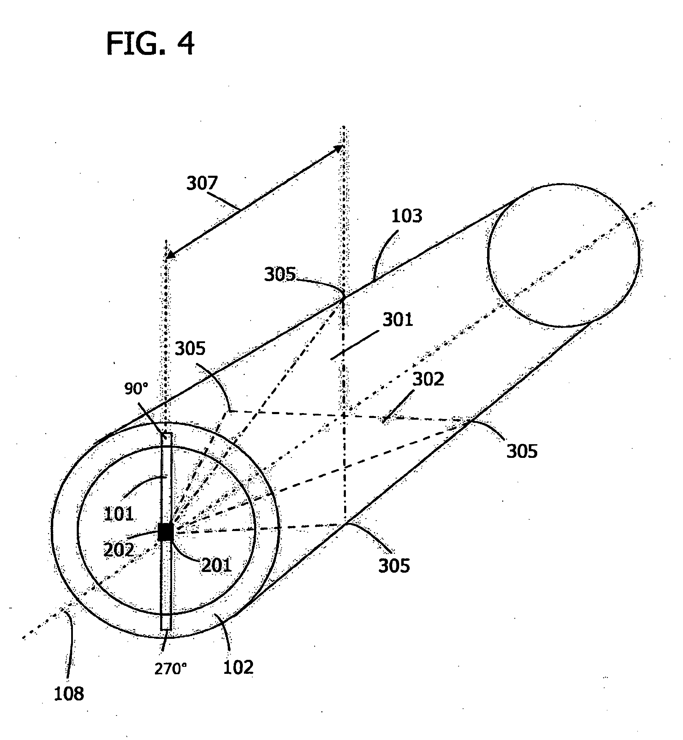

Es sei darauf hingewiesen, dass zur Erfassung von Biegemomenten des Rotorblatts 103 Sensoreinheiten im wesentlichen in der Nähe des Blattflansches 102 angeordnet sind, wobei das Rotorblatt 103 in der Nähe des Blattflansches als ein Zylinder oder als ein Kegelstumpf angenähert werden kann. Mit anderen Worten, der Lichtfächer 300 projiziert an den Innenwänden des Rotorblatts die Lichtlinien 306, die für eine Justage und Anbringung von Sensoren herangezogen werden können. Das Blattschott 104 des Rotorblatts 103 kann nun von einem Lichtfächer oder mehreren Lichtfächern, deren Ebenen winkelmäßig zueinander versetzt sein können, bestrahlt werden, wie unten stehend in der Beschreibung unter Bezugnahme auf Fig. 4 erläutert werden wird.

Das Blattschott 104 kann, je nach Durchmesser der Öffnung, den Öffnungswinkel 304 des Lichtfächers 300 mehr oder weniger begrenzen. Darüber hinaus ist es möglich, eine Aufweitung (einen vollen Öffnungswinkel 304) des Lichtfächers 300 durch eine Blendeneinrichtung, die an zentraler Position-symmetrisch zur Achse 108 des Rotorblatts 103 angeordnet ist, variabel einzustellen.

Die Einstellung des vollen Öffnungswinkels 304 eines Lichtfächers gemäß einer Ausführungsform, welche mit anderen hierin beschriebenen Ausführungsformen kombiniert werden kann, kann zu einem Öffnungswinkel von mindestens 100°, in typischer Weise zu einem Öffnungswinkel in einem Bereich von 120° bis 140° führen. Ein maximaler Öffnungswinkel 304 ist durch die Größe der Öffnung in dem Blattschott 104 des Rotorblatts 103 gegeben.

Gemäß einer Ausführungsform, die mit anderen hierin beschriebenen Ausführungsformen kombiniert werden kann, wird der mindestens eine Lichtfächer 300 mittig bzw. im wesentlichen mittig von einer an dem Blattflansch 102 angebrachten Halteeinrichtung 101 ausgehend emittiert. Eine zu installierende Sensoreinheit zur Aufnahme von Biegemomenten des Rotorblatts 103 kann nunmehr entlang der mindestens einen Lichtlinie 306 in Bezug auf eine Längsrichtung des Rotorblatts 103 in einem vorgegebenen Abstand zu dem Blattflansch des Rotorblatts ausgerichtet werden. Wie in Fig. 2 gezeigt, werden zur Ausrichtung von vier in Umfangsrichtung des Rotorblatts 103 verteilten Sensoren 105, die jeweils in 0°-Position, 90°-Position, 180°-Position und 270°-Position umfangsmäßig angeordnet sind, zwei senkrecht aufeinander stehende Lichtfächer, die eine erste Lichtfächerebene 109 und eine zweite Lichtfächerebene 110 aufweisen, bereitgestellt. Die erste Lichtfächerebene 109 legt die Umfangspositionen 90° und 270° zur Anbringung der Sensoren 105 fest, während die zweite Lichtfächerebene 110 die Umfangspositionen 0° und 180° zur Anbringung der Sensoren 105 festlegt.

Wie in Fig. 2 gezeigt, stehen die erste und die zweite Lichtfächerebene 109, 110 aufeinander senkrecht. Es sei jedoch darauf hingewiesen, dass die Lichtfächerebenen 109, 110 beliebige Winkel zueinander aufweisen können, je nach gewünschter umfangsmäßiger Messposition der Sensoren 105. Ferner ist es möglich, mehr als zwei Lichtfächerebenen oder nur eine Lichtfächerebene im Inneren des Rotorblatts 103 aufzuspannen, derart, dass umfangsmäßig eine vorgebbare Zahl von Sensoren 105 ausrichtbar ist.

Bei der in Fig. 2 gezeigten Anordnung ist die Ebene des ersten Lichtfächers 109 ungefähr senkrecht zur Ebene des zweiten Lichtfächers 110 angeordnet, d.h. der vorbestimmte Winkel zwischen der Ebene des ersten Lichtfächers und der Ebene des zweiten Lichtfächers beträgt ungefähr 90°. Dies hat den Vorteil, dass vier Sensoreinheiten 105 im Inneren des Rotorblatts 103 präzise angeordnet werden können.

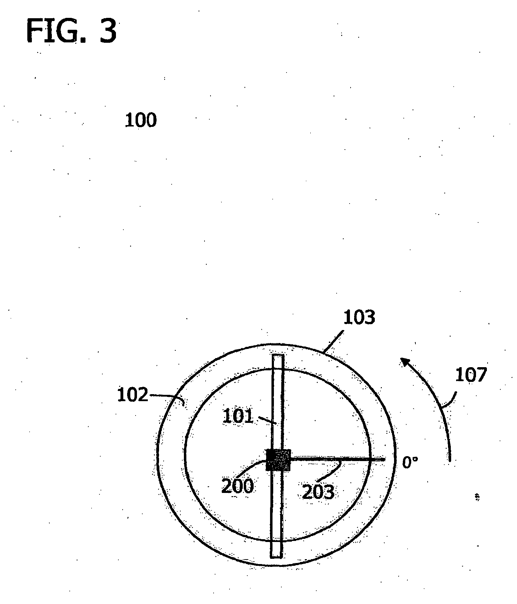

Fig. 3 zeigt eine Draufsicht auf den Blattflansch 102 des Rotorblatts 103 mit einer darauf angebrachten Halteeinrichtung 101 für die optische Emissionseinrichtung 200. Hierbei ist die Halteeinrichtung 101 umfangsmäßig in Bezug auf eine Winkelkoordinate 107 ausgerichtet. Mit Hilfe einer in Fig. 2 gezeigten Ausrichteinheit 203 ist es möglich, einen Bezug zu beispielsweise der 0°-Winkelkoordinate 107 in Umfangsrichtung herzustellen. Zu diesem Zweck ist gemäß einer Ausführungsform, die mit anderen hierin beschriebenen Ausführungsformen kombiniert werden kann, die Ausrichteinheit 203 als ein Ausrichtstab ausgebildet, welcher senkrecht zur Längsrichtung der Halteeinrichtung 101 angebracht ist.

Gemäß einem weiteren Ausführungsbeispiel kann die Ausrichteinheit 203 als ein Justierlaser ausgebildet sein, welcher, ausgehend von der Emissionseinrichtung 200, eine Laserlichtlinie (Punktlaser) zu dem Rand des Blattflansches 102 richtet, derart, dass die Emissionseinrichtung auf die 0°-Winkelkoordinate 107 ausgerichtet werden kann. An einem Ansatz des Rotorblatts am Spinner bzw. am Hub kann somit eine Winkelorientierung anhand einer 0°-Markierung ermittelt werden. Wie oben stehend unter Bezugnahme auf Fig. 1 beschrieben, ist das Rotorblatt 103 durch ein Blattschott 104 mit eingebrachter Luke zum Einstieg in das Blatt von dem Hub getrennt. Für die Installation von Sensoreinheiten in der Blattwurzel, d.h. im Inneren des Rotorblatts 103 hinter dem Blattschott 102 wird diese 0°-Winkelkoordinate 107, sowie je nach Sensorkonfiguration mehrere weitere Positionen, unter einem festen relativen Winkel zu dieser Winkelposition an die einfach zu ermittelnde axiale Sensorposition übertragen.

Schließlich ist es möglich, die Sensoren, wie beispielsweise faseroptische Dehnungssensoren, mit der Blattwurzel zu verkleben. Damit ist eine Ausrichtung und Positionierung, sowohl axial als auch angular, der Sensoren mit einer hohen Präzision möglich. Die mit diesen Sensoren gemessenen Dehnungsdaten lassen somit eine präzisen Rückschluss auf das Blattbiegemoment zu. Das Verfahren zum Installieren der Sensoreinheit innerhalb des Rotorblatts 103 ermöglicht es somit, Sensorpositionen schnell und kostengünstig bei einem geringen Zeitaufwand zu ermitteln und die Ausrichtung innerhalb von Rotorblättern 103 von Windenergieanlagen zu bewerkstelligen. Hierbei beruht die Positionierung auf der Projektion eines einfach zu erfassenden Koordinatensystems, d.h. 0°-Markierung und dazu senkrechte Achse, am Blattansatz in das Innere des Rotorblatts 103 einer Windenergieanlage, hinter dem Blattschott 102. Die in Fig. 3 gezeigte Ausrichteinheit 203 ist somit eine effiziente Markierungseinrichtung, die angepasst ist zur Festlegung einer Referenzposition des mindestens einen Lichtfächers in Umfangsrichtung des Rotorblatts 103.

Gemäß einer weiteren Ausführungsform, die mit hierin beschriebenen Ausführungsformen kombiniert werden kann, ist die Halteeinrichtung 101 in der Länge verstellbar, derart, dass eine Anpassung an den Durchmesser eines Blattflansches 102 ermöglicht werden kann. Die Halteeinrichtung 101 ist hierbei, beispielsweise nach einer Justage mit Hilfe der Ausrichteinheit 203, in den Blattflansch 102 einklemmbar. Somit kann die Halteeinrichtung 101 auf eine Winkelkoordinate 107 am Blattflansch 102, insbesondere auf die Winkelkoordinate 107 von ungefähr 0° mittels der Ausrichteinheit 203, die z.B. als ein Punktlaser oder ein Justierstabs ausgebildet sein kann, ausgerichtet werden. Die Halteeinrichtung 101 kann hierbei eine variable Länge in einem Bereich von 1,8 m bis 4 m aufweisen. Die erste und/oder die zweite Linienlaser-Emissionseinrichtung bzw. die Emissionseinrichtung 200 sind hierbei im wesentlichen mittig an der Halteeinrichtung 101, d.h. in der Nähe der Rotorblattachse 108 (siehe Fig. 2) angebracht. Dabei ändert in bevorzugter Weise eine Längenänderung der Halteeinrichtung 101 die im wesentlichen mittige Ausrichtung nicht.

Gemäß einer Ausführungsform kann die Halteeinrichtung 101 aus einem längenvariablen Stab bestehen, welcher am Blattansatz an einer Stelle maximalen Durchmessers positioniert wird. Mittig an diesem längenverstellbaren Stab befindet sich eine im rechten Winkel zum Stab abgehende Vorrichtung, welche auf die 0°-Markierung des Rotorblatts ausgerichtet wird. Diese Vorrichtung kann mechanischer Art, d.h. beispielsweise ausgeführt durch einen weiteren längenverstellbaren Stab, einen Justierstab oder eine Ausrichteinheit 203, oder durch eine optische Markierung, wie beispielsweise einen Punktlaser verwirklicht werden. Die beschriebene Anordnung ist demnach derart ausgerichtet, dass das entstehende Dreibein das Koordinatensystem des Rotorblatts 103 am Blattansatz abbildet und zusätzlich den Mittelpunkt oder eine andere gewünschte Position des entstehenden Kegelschnitts mindestens annähernd markiert. Durch die Ausrichtung relativ zum Rotorblattflansch, kann eine Installation unabhängig von der Rotorblattposition (Neigung) vorgenommen werden.

Fig. 4 zeigt ein Rotorblatt 103 mit am Blattflansch 102 angebrachter Halteeinrichtung 101 für die optische Emissionseinrichtung 200 in einer perspektivischen Ansicht. Wie in Fig. 4 gezeigt, ist die Halteeinrichtung in einer spezifischen Position, im gezeigten Beispiel in der Richtung 90°-270° ausgerichtet an dem Blattflansch 102 befestigt. Die Emissionseinrichtung 200, die eine erste Linienlaser-Emissionseinrichtung 201 zur Emission eines ersten Lichtfächers 301 (strichpunktierte Linie in Fig. 4) und eine zweite Linienlaser-Emissionseinrichtung 202 zur Emission eines zweiten Lichtfächers 302 (gestrichelte Linie in Fig. 4) enthalten kann, ist hierbei mittig in der Nähe der Rotorblattachse 108 angebracht.

Die beiden Lichtfächer 301, 302 sind hierbei entlang der Rotorblattachse 108 und ungefähr senkrecht aufeinander stehend ausgerichtet. Auf diese Weise ergeben sich vier Auftreffpunkte bzw. Auftrefflinien 305 des Linienlaserlichts entlang der Umfangsrichtung des Rotorblatts 103. Ausgehend von den Auftreffpunkten 305, weg von dem Blattflansch 102, bilden sich somit Lichtlinien (Laserlichtlinien) entlang der Innenfläche des Rotorblatts 103, so dass entlang dieser Lichtlinien Sensoren 105 (siehe Fig. 2) ausgerichtet werden können. Eine axiale Ausrichtung der Sensoren kann unter Zuhilfenahme einer Abstandsmesseinrichtung, welche einen axialen Abstand 307, beispielsweise gemessen von der Vorderseite des Blattflansches 102 oder von dem Blattschott 104 feststellt, erreicht werden.

Gemäß einer weiteren Ausführungsform, die mit anderen hierin beschriebenen Ausführungsformen kombiniert werden kann, können die beiden Lichtfächer unterschiedliche Wellenlängen aufweisen, derart, dass die erste Linienlaser-Emissionseinrichtung eine erste Wellenlänge emittiert, während die zweite Linienlaser-Emissionseinrichtung eine zweite Wellenlänge unterschiedlich von der ersten Wellenlänge emittiert. Die Anordnung mit unterschiedlichen Wellenlängen hat den Vorteil, dass die Laserlinien auch bei ungünstigen Umgebungsbedingungen umfangsmäßig voneinander unterschieden werden können. Dies ist insbesondere wichtig, wenn mehr als zwei Lichtfächer in das Innere des Rotorblatts 103 eingestrahlt werden, beispielsweise in einem Fall, wenn mehr als vier Sensoren 105 umfangsmäßig an den Innenseiten (Innenflächen) des Rotorblatts 103 angebracht werden müssen.

Es sei hier darauf hingewiesen, dass die Emissionseinrichtung 200 entweder aus separaten ersten und zweiten Linienlaser-Emissionseinrichtungen 201, 202 bestehen kann, wobei jede Linienlaser-Emissionseinrichtung 201 bzw. 202 einen individuellen Lichtfächer 301 bzw. 302 erzeugt. Ferner ist es möglich, dass die erste Linienlaser-Emissionseinrichtung 201 und die mindestens eine zweite Linienlaser-Emissionseinrichtung 202 miteinander kombiniert in einer gemeinsamen Einheit, z.B. in der Emissionseinrichtung 200 zusammengefasst sind.

Obwohl der Betrieb der beschriebenen Installationsvorrichtung zur Installation mindestens einer Sensoreinheit 105 innerhalb eines Rotorblatts 103 einer Windkraftanlage nicht auf eine wie in Fig. 4 gezeigte zylindrische Innenfläche des Rotorblatts 103 beschränkt ist, ist zur vereinfachenden Veranschaulichung der Ausführungsformen zumindest der flanschnahe Teil des Rotorblatts 103 in den Zeichnungen ungefähr zylindrisch dargestellt. Gemäß weiteren Ausführungsformen ist es aber möglich, dass das Rotorblatt 103 einen nichtkreisförmigen Querschnitt aufweist und die Form des gesamten Rotorblatts 103 damit eine nicht-zylindrische Ausprägung erhält. Zur Übersichtlichkeit der Darstellung in Fig. 4 sind ferner das in Fig. 1 gezeigte Blattschott 104 des Rotorblatts 103 und die in Fig. 3 gezeigte Ausrichteinheit 203 weggelassen.

Es sei darauf hingewiesen, dass der Öffnungswinkel 304 entweder durch das Blattschott 104 (Fig. 1) oder durch andere Maßnahmen innerhalb der ersten und zweiten Linienlaser-Emissionseinrichtungen 201, 202 vorgegeben werden kann. Somit kann die Emissionseinrichtung 200 die erste an der Halteeinrichtung 101 angebrachte Linienlaser-Emissionseinrichtung 201 aufweisen, die angepasst ist zur Emission des ersten im wesentlichen ebenen Lichtfächers 301 in das Innere des Rotorblatts 103. Ferner kann die Emissionseinrichtung 200 mindestens eine zweite Linienlaser-Emissionseinrichtung 202 aufweisen, die angepasst ist zur Emission eines zweiten im wesentlichen ebenen Lichtfächers 302 in das Innere des Rotorblatts 103.

Die z.B. im wesentlichen mittig an der Halteeinrichtung 101 (längenverstellbarer Stab, siehe oben) angebrachte Emissionseinrichtung 200 kann somit mindestens zwei in Richtung auf das Blattinnere gerichtete Fächerlichtstrahlen in normaler Richtung zu der durch das Dreibein aus Halteeinrichtung 101 und Ausrichteinheit 203 aufgespannten Ebene emittieren. Die Fächerlichtstrahlen durchdringen die Öffnung des Blattschotts 104 und zeichnen an den durch die eingestellte Orientierung der Lichtstrahlen definierten Winkelpositionen die axiale Richtung des Blatts an. Durch eine einfache Bestimmung des axialen Abstands der Sensorposition vom Blattschott 104 in Verlängerung der angezeichneten Winkelpositionen und Richtungen kann die Sensorposition somit in einfacher und effizienter Weise bestimmt werden.

Es konnte gezeigt werden, beispielsweise bei Testinstallationen, dass unter Zuhilfenahme der beschriebenen Installationsvorrichtung Ausrichtzeiten unterhalb von 15 Minuten für die Ermittlung der Sensorposition erreichbar sind. Dies stellt eine erhebliche Zeitersparnis im Vergleich zu einem herkömmlichen Installationsbetrieb dar. Bei auf einem herkömmlichen Installationsbetrieb beruhenden Referenzinstallationen ohne derartige Installationsvorrichtungen, wie sie oben stehend unter Bezugnahme unterschiedlicher Ausführungsformen beschrieben sind, wird für das Auffinden der entsprechenden Sensorpositionen eine Zeitdauer von etwa zwei Stunden veranschlagt.

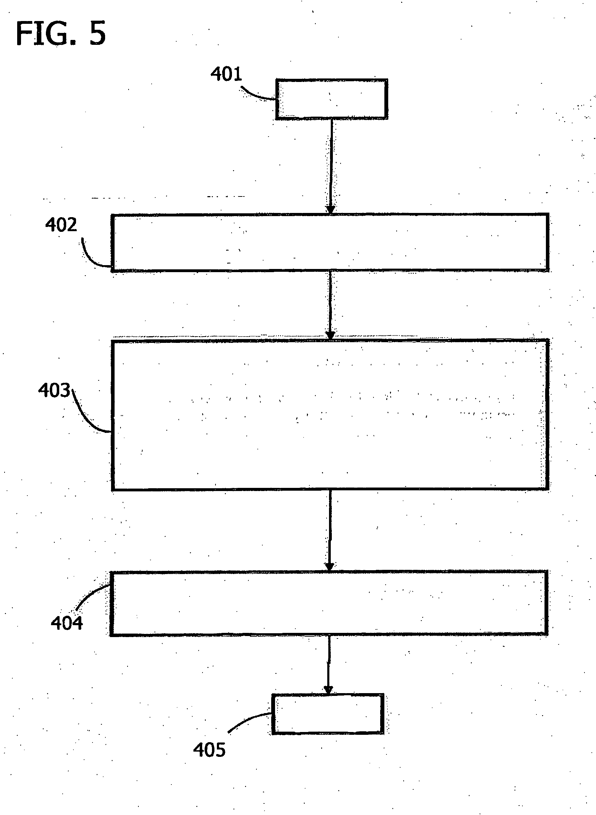

Fig. 5 ist ein Flussdiagramm zur Veranschaulichung eines Verfahrens zum Installieren mindestens einer Sensoreinheit 105 innerhalb eines Rotorblatts 103 einer Windkraftanlage. Die Prozedur startet bei einem Block 401. Dann wird in einem Block 402 ein erster im wesentlichen ebener Lichtfächer 301 in das Innere des Rotorblatts 103 eingestrahlt (emittiert).

In einem Block 403 wird mindestens ein zweiter im wesentlichen ebener Lichtfächer 302 in das Innere des Rotorblatts 103 emittiert, wobei die Ebene des ersten Lichtfächers 301 in einem vorbestimmten Winkel zu der Ebene des zweiten Lichtfächers 302 ausgerichtet ist. Hierbei sind die Ebenen des ersten und zweiten Lichtfächers 301, 302 ferner an dem Blattflansch 102 des Rotorblatts 103 ausgerichtet. Mindestens eine Sensoreinheit 105 kann dann in Bezug auf die Lichtfächer 301, 302 ausgerichtet werden (Block 404). Die Prozedur endet in einem Block 405.

## Patentansprüche

1. Verfahren zum Installieren mindestens einer Sensoreinheit (105) innerhalb eines Rotorblatts (103) einer Windkraftanlage, umfassend:
Emittieren eines ersten im wesentlichen ebenen Lichtfächers (300, 301) in das Innere des Rotorblatts (103);
Emittieren mindestens eines zweiten im wesentlichen ebenen Lichtfächers (300, 302) in das Innere des Rotorblatts;
wobei die Ebene (109) des ersten Lichtfächers (300, 301) in einem vorbestimmten Winkel zu der Ebene (110) des zweiten Lichtfächers ausgerichtet ist, und wobei die Ebenen (109, 110) des ersten und zweiten Lichtfächers an einem Blattflansch (102) des Rotorblatts ausgerichtet sind; und
Ausrichten der mindestens einen Sensoreinheit (105) in Bezug auf die Lichtfächer.

2. Verfahren nach Anspruch 1, wobei der mindestens eine Lichtfächer (300, 301, 302) im wesentlichen mittig von einer an dem Blattflansch (102) des Rotorblatts (103) angebrachten Halteeinrichtung (101) ausgehend emittiert wird.

3. Verfahren nach Anspruch 2, wobei die Halteeinrichtung (101) in der Länge verstellbar ist, und in typischer Weise eine variable Länge in einem Bereich von 1,8 m bis 4 m aufweist.

4. Verfahren nach Anspruch 2 oder 3, wobei die Halteeinrichtung (101) auf eine Winkelkoordinate an dem Blattflansch (102), insbesondere auf die Winkelkoordinate von ungefähr 0° mittels eines Punktlasers oder eines Justiersstabs ausgerichtet wird.

5. Verfahren nach einem der voranstehenden Ansprüche, wobei die Halteeinrichtung (101) in den Blattflansch (102) eingeklemmt wird.

6. Verfahren nach mindestens einem der voranstehenden Ansprüche, wobei die mindestens eine Sensoreinheit (105) in Bezug auf eine Längsrichtung des Rotorblatts (103) entlang mindestens einer von dem Lichtfächer (300, 301, 302) erzeugten Lichtlinie (306) in einem vorgegebenen Abstand zu einem Blattschott (104) des Rotorblatts (103) ausgerichtet wird.

7. Verfahren nach mindestens einem der voranstehenden Ansprüche, wobei ein Öffnungswinkel (304) mindestens eines der Lichtfächer (300, 301, 302) variabel eingestellt wird, und/oder wobei der Öffnungswinkel (304) mindestens 100° beträgt, und in typischer Weise in einem Bereich von 120° bis 140° liegt.

8. Installationsvorrichtung zur Installation mindestens einer Sensoreinheit (105) innerhalb eines Rotorblatts (103) einer Windkraftanlage, umfassend:
eine Halteeinrichtung (101), die angepasst ist zur Anbringung an einem Blattflansch (102) des Rotorblatts (103);
eine erste an der Halteeinrichtung (101) angebrachte Linienlaser-Emissionseinrichtung (200, 201), die in montiertem Zustand angepasst ist zur Emission eines ersten im wesentlichen ebenen Lichtfächers (300, 301) in das Innere des Rotorblatts (103);
eine zweite an der Halteeinrichtung angebrachte Linienlaser-Emissionseinrichtung (200, 202), die in montiertem Zustand angepasst ist zur Emission eines zweiten im wesentlichen ebenen Lichtfächers (300, 302) in das Innere des Rotorblatts (103), wobei die Ebene des ersten Lichtfächers in einem vorbestimmten Winkel zu der Ebene des zweiten Lichtfächers ausgerichtet ist, und
eine Ausrichteinheit (203) zum Ausrichten der Halteeinrichtung (101) auf eine Winkelkoordinate des Blattflansches (102);

9. Installationsvorrichtung nach Anspruch 8, wobei die Halteeinrichtung (101) eine variable Länge in einem Bereich von 1,8 m bis 4 m aufweist, wobei die erste und/oder die zweite Linienlaser-Emissionseinrichtung (200, 201, 202) im wesentlichen mittig angeordnet sind.

10. Installationsvorrichtung nach Anspruch 8 oder 9, wobei der Lichtfächer (300, 301, 302) der ersten und/oder der zweiten Linienlaser-Emissionseinrichtung (200, 201, 202) einen vollen Öffnungswinkel (304) von mindestens 100°, in typischer Weise in einem Bereich von 120° bis 140° aufweist.

## Claims

1. Method for installing at least one sensor unit (105) within a rotor blade (103) of a wind turbine, comprising:
emitting a first substantially planar light beam (300, 301) in the interior of the rotor blade (103);
emitting at least a second substantially planar light beam (300, 302) in the interior of the rotor blade;
wherein the plane (109) of the first light beam (300, 301) is oriented at a predetermined angle to the plane (110) of the second light beam, and wherein the planes (109, 110) of the first and second light beam are aligned on a blade flange (102) of the rotor blade; and
aligning the at least one sensor unit (105) with respect to the light beams.

2. Method according to claim 1, wherein the at least one light beam (300, 301, 302) is emitted substantially centrally from a holding device (101) attached to the blade flange (102) of the rotor blade (103).

3. Method according to claim 2, wherein the holding device (101) is adjustable in length and typically has a variable length in a range from 1.8 m to 4 m.

4. Method according to claim 2 or 3, wherein the holding device (101) is aligned to an angular coordinate on the blade flange (102), in particular to an angular coordinate of approximately 0° by means of a point laser or an adjustment rod.

5. Method according to one of the preceding claims, wherein the holding device (101) is clamped in the blade flange (102).

6. Method according to at least one of the preceding claims, wherein the at least one sensor unit (105) is aligned in reference to a longitudinal direction of the rotor blade (103) along at least one light line produced by the light beam (300, 301, 302) at a predetermined distance from a blade bulkhead (104) of the rotor blade (103).

7. Method according to at least one of the preceding claims, wherein a beam angle (304) of at least one light beam (300, 301, 302) is variably adjusted, and/or wherein the beam angle (304) is at least 100°, and typically lies in a range from 120° to 140°.

8. Installation apparatus for the installation of at least one sensor unit (105) within a rotor blade (103) of a wind turbine, comprising:
a holding device (101), which is adapted for attachment to a blade flange (102) of the rotor blade (103);
a first laser line emission device (200, 201) attached to the holding device (101), which in mounted condition is adapted for emitting a first substantially planar light beam (300, 301) in the interior of the rotor blade (103);
a second laser line emission device (200, 202) attached to the holding device, which in mounted condition is adapted for emitting a second substantially planar light beam (300, 302) in the interior of the rotor blade (103), wherein the plane of the first light beam is oriented at a predetermined angle to the plane of the second light beam, and
an alignment unit (203) for aligning the holding device (101) to an angular coordinate of the blade flange (102).

9. Installation apparatus according to claim 8, wherein the holding device (101) has a variable length in a range from 1.8 m to 4 m, wherein the first and/or the second laser line emission device (200, 201, 202) are arranged substantially centrally.

10. Installation apparatus according to claim 8 or 9, wherein the light beam (300, 301, 302) of the first and/or the second laser line emission device (200, 201, 202) has a full beam angle (304) of at least 100°, typically in a range of 120° to 140°.

## Revendications

1. Procédé d'installation d'au moins une unité de capteur (105) dans une pale de rotor (103) d'une turbine éolienne, comprenant le fait de:
émettre une première lame de lumière sensiblement plane (300, 301) à l'intérieur de la pale de rotor (103);
émettre au moins une deuxième lame de lumière sensiblement plane (300, 302) à l'intérieur de la pale de rotor;
dans lequel le plan (109) de la première lame de lumière est orientée (300, 301) selon un angle prédéterminé par rapport au plan (110) de la deuxième lame de lumière, et dans lequel les plans (109, 110) des première et deuxième lames de lumière sont alignés sur une bride de lame (102) de la pale de rotor; et
aligner l'au moins une unité de capteur (105) par rapport aux lames de lumière.

2. Procédé selon la revendication 1, dans lequel l'au moins une lame de lumière (300, 301, 302) est émise sensiblement au centre d'un moyen de retenue (101) placé sur la bride de lame (102) de la pale de rotor (103).

3. Procédé selon la revendication 2, dans lequel le moyen de retenue (101) est réglable en longueur, et présente typiquement une longueur variable dans une plage de 1,8 m à 4 m.

4. Procédé selon la revendication 2 ou 3, dans lequel le moyen de retenue (101) est aligné sur une coordonnée angulaire sur la bride de lame (102), en particulier sur la coordonnée angulaire d'environ 0° à l'aide d'un laser à points ou d'une tige de réglage.

5. Procédé selon l'une des revendications précédentes, dans lequel le moyen de retenue (101) est serré sur la bride de lame (102).

6. Procédé selon au moins l'une des revendications précédentes, dans lequel l'au moins une unité de capteur (105) est alignée par rapport à une direction longitudinale de la pale de rotor (103) le long d'au moins une ligne de lumière (306) générée par la lame de lumière (300, 301, 302) à une distance prédéterminée d'une cloison en forme de feuille (104) de la pale de rotor (103).

7. Procédé selon au moins l'une des revendications précédentes, dans lequel un angle d'ouverture (304) d'au moins l'une des lames de lumière (300, 301, 302) est réglée de manière variable, et/ou dans lequel l'angle d'ouverture (304) est d'au moins 100°, et se situe typiquement dans une plage de 120° à 140°.

8. Dispositif d'installation pour l'installation d'au moins une unité de capteur (105) dans une pale de rotor (103) d'une turbine éolienne, comprenant:
un moyen de retenue (101) qui est adapté pour être placé sur une bride de lame (102) de la pale de rotor (103);
un premier moyen d'émission de laser à ligne (200, 201) placé sur le moyen de retenue (101) est, à l'état monté, adapté pour émettre une première lame de lumière sensiblement plane (300, 301) à l'intérieur de la pale de rotor (103);
un deuxième moyen d'émission de laser à ligne (200, 202) placé sur le moyen de retenue est, à l'état monté, adapté pour émettre une deuxième lame de lumière sensiblement plane (300, 302) à l'intérieur de la pale de rotor (103), où le plan de la première lame de lumière est orientée selon un angle prédéterminé par rapport au plan de la deuxième lame de lumière, et
une unité d'orientation (203) destinée à aligner le moyen de retenue (101) sur une coordonnée angulaire de la bride de pale (102).

9. Dispositif d'installation selon la revendication 8, dans lequel le moyen de retenue (101) présente une longueur variable dans une plage de 1,8 m à 4 m, dans lequel le premier et/ou le deuxième moyen d'émission de laser à ligne (200, 201, 202) disposés sensiblement au centre.

10. Dispositif d'installation selon la revendication 8 ou 9, dans lequel la lame de lumière 000, 301, 302) du premier et/ou du deuxième moyen d'émission de laser à ligne (200; 201, 202) présente un angle d'ouverture complet (304) d'au moins 100°, typiquement dans une plage de 120° à 140°.
